# EUROPEAN PATENT SPECIFICATION

(11) **EP 2 589 426 B1**
(45) Date of publication and mention of the grant of the patent: **08.06.2016**
(21) Application number: 11187508.4
(22) Date of filing: 02.11.2011
(51) Int. Cl.: B01D 53/56, B01D 53/86, C01C 1/04, F23J 15/00

(54) **METHOD FOR REMOVING NITROGEN OXIDES FROM COMBUSTION FUMES WITH ON-SITE GENERATION OF AMMONIA**
VERFAHREN ZUM ENTFERNEN VON STICKSTOFFOXIDEN AUS VERBRENNUNGSABGASEN MIT AMMONIAKERZEUGUNG VOR ORT
PROCÉDÉ POUR ÉLIMINER DES OXYDES D'AZOTE DE FUMÉES DE COMBUSTION AVEC GÉNÉRATION SUR SITE D'AMMONIAC

(43) Date of publication of application: 08.05.2013
(73) Proprietor: CASALE SA, 6900 Lugano (CH)
(72) Inventor: Ostuni, Raffaele, 6900 Lugano (CH); Zardi, Federico, 6932 Breganzona (CH)
(74) Representative: Zardi, Marco

(56) References cited:
- FR-A1- 2 852 057
- JP-A- 6 114 235
- JP-A- 11 292 531
- JP-A- 2003 267 725
- US-A1- 2005 025 692

## Description

### Field of the invention

The present invention relates to reduction of nitrogen oxides in the combustion fumes of a fixed installation.

### Prior Art

The combustion is still the source of most of the power generated in the world. One of the major environmental concerns in a thermal power plant is the formation of nitrogen oxides (NOx) during combustion. There are techniques for reducing the formation of NOx but a certain amount of said oxides in the flue gas is unavoidable and hence there is the need to remove nitrogen oxides from the flue gas stream. The same problem of NOx control arises with other fixed installations where a combustion takes place, like for example a waste incineration plant or a reformer or a fired heater. Hence any installation, and especially a large installation, using a process of combustion faces the problem of NOx control.

A known technique for removing nitrogen oxides from a flue gas is selective reduction, where nitrogen oxides are converted into nitrogen (N₂) and water, with the help of a reductant in an aqueous solution (ammonia water NH4OH or urea) or in a gaseous form (ammonia). The known art include selective non-catalytic reduction (SNCR) and selective catalytic reduction (SCR). The SNCR has been widely used in waste incineration plants and achieves a noticeable NOx reduction at higher temperatures, e.g. around 900 to 1000 °C; the SCR is often used in thermal power plants, for example steam or combined power plants, and is effective at a lower temperature around 400 °C.

An installation comprising an SNCR or SCR equipment and using ammonia as the reductant, hence, consumes a certain amount of ammonia in order to remove NOx from the combustion flue gas.

This amount of ammonia is however a small amount in the current ammonia market. For example a large installation such as a 300 MW steam turbine power plant needs around 100 kg/h of ammonia for NOx removal. Nowadays ammonia is produced with large ammonia plants, where hydrogen is produced by steam reforming, and with a capacity of several hundreds of tons per day. The current tendency in the ammonia world is in favour of world scale plants delivering 1000 - 2000 tons/day and the so called mega-ammonia plants reaching 4000 - 5000 tons/day of ammonia. The reason is that the conventional, steam-reforming process needs several equipments including a primary reformer, secondary reformer, shift and CO2-removal for treatment of the reformed gas, etc. Hence the front-end is a large and expensive equipment, with a considerable capital cost, which incentives large plants with a high production rate. In particular, scaling to a capacity of around 1 ton/day (that is, the capacity required by a power plant of some hundreds of megawatts) is not economically viable.

Hence, operation of a power plant or other installation with an SNCR or SCR unit needs the purchase of this relatively small amount of ammonia, in a market which is governed by the production and exchange of much larger supplies. The cost for such small quantities of ammonia is high and volatile, and sometimes the availability of said small quantities is not sure.

JP 2003 267725 discloses a method of reducing NOx in the flue gas of a thermal power plant comprising on-site ammonia production.

US 2005/025692 and JP 6 114235 disclose flue gas denitrification using on-site ammonia.

### Summary of the invention

The aim of the invention is to overcome the above problem. More in detail, the problem underlying the invention is to find a more convenient way to control the nitrogen oxides in the combustion fumes of a fixed installation.

The term installation is used with reference to a power plant. The invention can be applied to a fixed installation where a combustion takes place and nitrogen oxides are produced. The invention relates to control of nitrogen oxides in the fumes of a thermal power plant. A term thermal power plant is understood as a power plant for production of electric energy where the source of energy is the combustion of a fuel and then the problem of nitrogen oxides arises. Examples of thermal power plants to which the invention is applicable include fossil-fuelled and biomass-fuelled power plants, including also plants fuelled with solid waste or a waste-derived fuel.

This problem is solved with a method according to claim 1 for the control of nitrogen oxides in the combustion fumes, including the on-site production of ammonia with electrolysis of water as a source of hydrogen, and separation of air as a source of nitrogen. The production of ammonia comprises the steps of: producing a hydrogen current by means of electrolysis of water; producing a nitrogen current by means of separation of nitrogen from air; forming an ammonia make up gas containing hydrogen and nitrogen from said hydrogen current and nitrogen current respectively, and reacting said make up gas at a suitable ammonia synthesis pressure. The ammonia, or a reductant obtained with said ammonia such as an aqueous solution thereof, is used for reduction of the nitrogen oxides contained in the combustion fumes.

The term on-site production of ammonia means that ammonia is produced directly in the site of the installation.

The above terms of hydrogen current and nitrogen current shall be intended as a hydrogen-rich and nitrogen-rich current, respectively. In particular the hydrogen current may contain some impurities and the nitrogen current may contain impurities and some oxygen.

The step of forming ammonia make up gas preferably comprise the steps of mixing together the hydrogen current and nitrogen current, compression to the ammonia synthesis pressure and purification. Said ammonia synthesis pressure is preferably in the range 80 - 300 bar.

The nitrogen current is preferably obtained by one of the following means: molecular sieves; pressure swing adsorption (PSA); vacuum pressure swing adsorption (VPSA); temperature swing adsorption (TSA); cryogenic separation.

The water electrolysis section need not be described since production of hydrogen by electrolysis is known. An electrolyser for production of hydrogen at a high pressure is describe for example in EP 2 180 087.

The water electrolysis section is powered with electric energy. Hence the production of hydrogen and, then, the production of ammonia with the on-site ammonia plant, will need some input of electric energy. A feature of the invention is that the production rate of ammonia is regulated according to the cost and/or availability of electric energy: An excess of ammonia, compared to the actual need for removing NOx from the flue gas, can be stored in an appropriate tank or vessel.

The water electrolysis will slightly reduce the net electric output of the plant. However, the ammonia can be produced and stored for subsequent use when the selling price of electricity is low, for example during night time. In some cases the price of electricity can be null, especially for a baseload power plant whose production is substantially constant and hence is in excess during the off-peak hours. The production of ammonia can be reduced or stopped, thus maximizing the net output of the plant, when the demand and price of electricity are higher.

Moreover, the energy consumption for hydrogen production is a small fraction (less than 1% and typically about 0.5%) of the output of the power plant. The overall consumption for the production of ammonia is typically less than 1% of the nominal output of the power plant. For example a 300 MW power plant needs about 100 kg/h of ammonia, which can be produced, according to the invention, with about 1 MW of electric power, namely 0.3%.

Hence the consumption of some electric energy is not a disadvantage, since energy is readily available at a low cost, especially during off-peak hours. On the other hand, the invention has the great advantage that the power plant is made independent from the ammonia market, being able to produce its own ammonia for the purpose of reduction of nitrogen oxides. Electric energy can be directed to ammonia production when the sale price of said energy would be lower or even null, thus producing ammonia at a very low cost or virtually at no cost.

The step of reduction of nitrogen oxides is preferably a selective catalytic reduction (SCR) but the invention is also applicable to installations using SNCR technique.

The term of removing nitrogen oxides means that nitrogen oxides are brought to a low concentration, depending on applicable regulations or contingent requirements. For example the nitrogen oxides can be removed to achieve a concentration of less than 100 mg/Nm³.

An aspect of the invention is also the modification of an installation by addition of the above described on-site ammonia plant and in accordance with claim 6. Said installation comprises a selective reduction unit for removing nitrogen oxides contained in flue gas produced by combustion, by using ammonia or an ammonia-based reductant; the method of modification comprises the steps of: adding an on-site plant for the generation of ammonia, said ammonia plant comprising at least a water electrolysis section for production of a hydrogen current; an air separation unit for production of a nitrogen current from air; means to form an ammonia make up gas by mixing said hydrogen current and nitrogen current, and a high-pressure synthesis section for producing ammonia with said make-up gas.

The advantages of the invention will be elucidated with the help of the following description of preferred and non-limiting embodiments.

### Brief description of the drawings

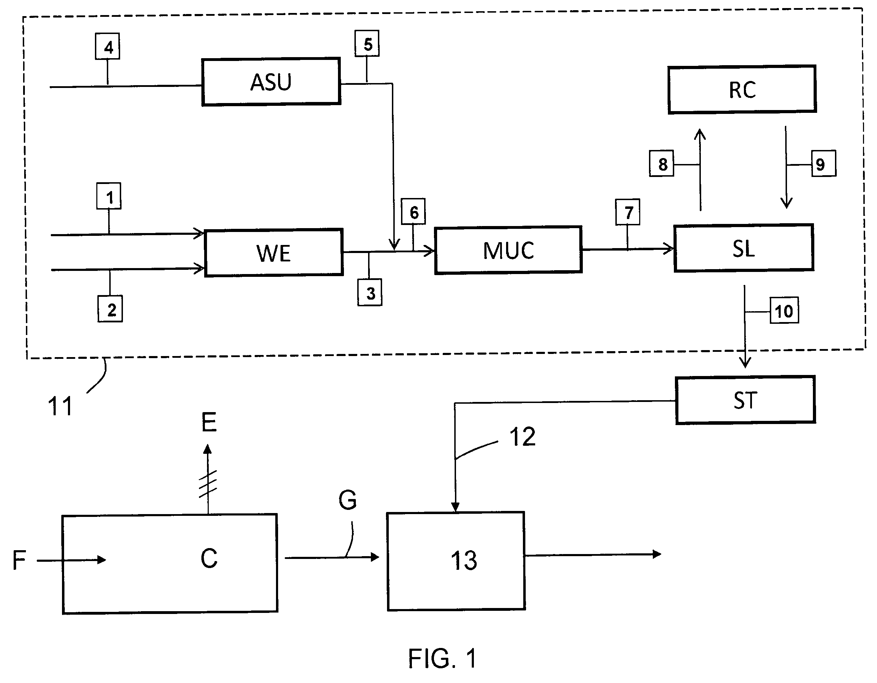

Fig. 1 is a block diagram showing a preferred embodiment of the invention.

### Detailed description of preferred embodiments

Referring to Fig. 1, the dotted boundary line 11 denotes an ammonia plant which is added on-site to a thermal power plant. The thermal power plant is generally denoted with block C and converts a fuel F into electric energy E. The stream G denotes combustion flue gas of said thermal power plant.

In this example the ammonia plant is added to a thermal power plant but in other applications of the invention, the ammonia plant 11 is added to other kinds of a fixed installation, where a combustion takes place and a flue gas is produced. Electric energy E is produced in said installation.

Turning back to Fig. 1, the gas stream G could be, for example, the combustion fumes of a steam generator in a steam-turbine plant, or hot exhaust gas of a gas turbine or engine. Said stream G contains an amount of nitrogen oxides (NOx) formed during the combustion of the fuel F and which need to be removed, until an acceptable low concentration of NOx is reached.

The reduction of NOx takes place in a selective removal unit 13 and with the help of ammonia or an ammonia solution 12 produced in the on-site ammonia plant 11. In a preferred embodiment, in particular for a thermal power plant, said unit 13 is a SCR unit but a SNCR unit could also be used. For example, the hot combustion gases are first cooled in a heat exchanger, for example an economizer; they enter the SCR unit 13 around 350 °C; then the purified fumes are usually directed to a further heat recovery (e.g. preheating of combustion air) and/or they are treated (e.g. filtered) before release into atmosphere.

Said ammonia plant 11 comprises: a water electrolysis unit WE, an air separation unit ASU, a gas compressor MUC, a synthesis loop SL and a recycle compressor RC. The water electrolysis unit WE is fed with demineralised water 2 and electric power 1, and delivers a current 3 composed mainly of hydrogen. The ASU is fed with air 4 and produces a current 5 composed mainly of nitrogen.

The process of electrolysis of water, which takes place in the unit 1, is known in the art and need not be described. The nitrogen current 5 is preferably obtained with molecular sieves or with a process selected between pressure swing adsorption (PSA), vacuum pressure swing adsorption (VPSA) or temperature swing adsorption (TSA), or with cryogenic separation.

The hydrogen current 3 and nitrogen current 5 are mixed together and form a make-up gas 6. Said gas 6 is compressed to a synthesis pressure, preferably in the range 80 to 300 bar. The block MUC denotes the make-up gas compression and purification (removal of impurities) in order to obtain a compressed make-up gas 7 almost solely composed of hydrogen and nitrogen. The compressed gas 7 is sent to the synthesis loop SL; said loop SL is operating at said synthesis pressure, and comprises at least an ammonia reactor.

The product gas of said reactor contains ammonia and a certain amount of reagents (hydrogen and nitrogen). Ammonia is separated from said product gas and the remaining reagents are recycled to the reactor via a recycle compressor RC and currents 8, 9. In some embodiments, the recycle compressor RC is replaced by an additional stage of the gas compressor, namely the current 8 is sent to said additional stage of the compressor and returns into the loop SL via the stream 6.

The stream 10 is the ammonia product of the synthesis loop SL. Said ammonia product 10 is stored in a suitable storage vessel ST and is injected via the flow line 12 into the SCR unit 13. In some embodiments, the ammonia is stored in the form of an aqueous solution (ammonia-water).

The on-site ammonia plant 11 consumes a part of the energy E produced by the power plant, in particular for the production of the hydrogen current 3 in the water electrolysis unit WE. Hence, it may be stated that electric energy is basically the source of ammonia, provided that water 2 is available.

The production of ammonia 10 follows the peaks of the demand of electricity. During off-peak hours ammonia can be produced in excess over the the amount necessary for the SCR unit 13, so that some ammonia is stored in the vessel ST; during peak hours, on the other hand, the production of ammonia is preferably reduced below the actual need of unit 13, or even stopped, in order to increase the net production of electricity; the ammonia stored in the vessel ST is then used to form at least part of the ammonia stream 12. In a more general way, the actual production of ammonia is regulated according to the availability and/or cost of electric energy.

## Claims

1. A method for the control of nitrogen oxides content in the combustion fumes (G) of a fixed installation where said combustion takes place, wherein:
- ammonia is produced in the site of said installation, with a process including: production of a hydrogen current (3) by means of electrolysis of water; production of a nitrogen current (5) by means of separation of nitrogen from air; formation of an ammonia make up gas containing hydrogen and nitrogen from said hydrogen current and nitrogen current respectively, and reaction of said make up gas at a suitable ammonia synthesis pressure;
- said ammonia (10, 12) is used for a process of reduction of nitrogen oxides contained in said combustion fumes,
**characterized in that**:
- the production rate of ammonia (10) is regulated according to the cost and/or availability of electric energy, and **in that**:
- said installation is a power plant for the production of electric energy; the production rate of ammonia (10) is regulated according to the load of said power plant and/or according to the demand of electric energy, the production of ammonia being increased during electricity off-peak hours when the demand of electricity is low, and being reduced or stopped, thus maximizing the net output of said plant, during electricity peak hours when the demand of electric energy is higher.

2. A method according to claim 1, said process of reduction of nitrogen oxides being a process of selective catalytic reduction or selective non-catalytic reduction.

3. A method according to claim 1 or 2, said nitrogen current being obtained by one of the following means: molecular sieves; pressure swing adsorption (PSA); vacuum pressure swing adsorption (VPSA); temperature swing adsorption (TSA); cryogenic separation.

4. A method according to any of claims 1 to 3, the synthesis pressure of ammonia being in the range 80 to 300 bar.

5. A method according to claim 1, where excess ammonia is produced during said off-peak hours, or when production of ammonia is greater than actual need of the process for NOx reduction, and said excess ammonia is stored in a storage vessel (ST), either in anhydrous form or in the form of an aqueous solution.

6. A method for modification of an installation comprising a unit for reduction of nitrogen oxides from a combustion flue gas (G), said method being **characterized in that**:
- an on-site ammonia plant (11), for the generation of ammonia (10) and for use in said reduction unit, is added to said installation,
- said ammonia plant (11) comprising at least: a water electrolysis section (WE) for production of a hydrogen current (3) from water and electric energy; an air separation unit for production of a nitrogen current (5) from air; means to form an ammonia make up gas (6) by using said hydrogen current and nitrogen current, and an ammonia synthesis section (SL),
- said installation being a power plant, and
- wherein the installation is adapted to regulate the production rate of ammonia (10) according to the load of said power plant and/or according to the demand of electric energy, the production of ammonia being increased during electricity off-peak hours when the demand of electricity is low, and being reduced or stopped, thus maximizing the net output of said plant, during electricity peak hours when the demand of electric energy is higher.

7. A method according to claim 6, said unit for reduction of nitrogen oxides being a selective catalytic reduction or selective non-catalytic reduction unit.

## Patentansprüche

1. Verfahren zur Regulierung des Stickoxidgehalts in den Verbrennungsabgasen (G) einer festen Anlage, wo die Verbrennung stattfindet, wobei:
- Ammoniak in der Anlage produziert wird, mit einem Verfahren umfassend: Erzeugung eines Wasserstoffstroms (3) durch Elektrolyse von Wasser; Erzeugung eines Stickstoffstroms (5) durch Abscheidung von Stickstoff aus Luft; Erzeugung eines Ammoniak-Frisch-Gases bzw. Ammoniak-Make-Up-Gases enthaltend Wasserstoff und Stickstoff jeweils aus dem Wasserstoffstrom und dem Stickstoffstrom und Reaktion des Frisch-Gases bei einem geeigneten Ammoniaksynthesedruck;
- das Ammoniak (10, 12) für ein Verfahren zur Reduktion von Stickoxiden, die in den Verbrennungsgasen enthalten sind, verwendet wird,
**dadurch gekennzeichnet, dass**:
- die Produktionsrate von Ammoniak (10) gemäß der Kosten und/oder der Verfügbarkeit von elektrischer Energie gesteuert wird, und dadurch, dass:
- die Anlage ein Kraftwerk zur Erzeugung elektrischer Energie ist; die Produktionsrate von Ammoniak (10) gemäß der Belastung des Kraftwerks und/oder gemäß des Bedarfs an elektrischer Energie gesteuert wird, wobei sich die Ammoniakproduktion während der Elektrizität-Schwachlaststunden, wenn der Bedarf an Elektrizität gering ist, erhöht und während der Elektrizität-Spitzenlaststunden, wenn der Bedarf an elektrischer Energie höher ist, reduziert oder gestoppt wird, wodurch die Nettoleistung der Anlage auf ein Höchstmaß gebracht wird.

2. Verfahren gemäß Anspruch 1, wobei das Verfahren zur Reduktion von Stickoxiden ein Verfahren der selektiven katalytischen Reduktion oder der selektiven nicht-katalytischen Reduktion ist.

3. Verfahren gemäß Anspruch 1 oder 2, wobei der Stickstoffstrom durch eine der folgenden Möglichkeiten erhalten wird: Molekularsiebe, Druckwechsel-Adsorption (PSA); Vakuum-Druckwechsel-Adsorption (VPSA); Temperaturwechsel-Adsorption (TSA); kryogene Abscheidung.

4. Verfahren gemäß einem der Ansprüche 1 bis 3, wobei der Synthesedruck von Ammoniak im Bereich von 80 bis 300 bar liegt.

5. Verfahren gemäß Anspruch 1, wobei während der Schwachlaststunden oder wenn die Ammoniakproduktion größer als der gegenwärtige Bedarf für das Verfahren zur Reduktion von NOx ist, überschüssiges Ammoniak erzeugt wird und, wobei das überschüssige Ammoniak in einem Vorratsgefäß (ST) entweder in wasserfreier Form oder in Form einer wässrigen Lösung aufbewahrt wird.

6. Verfahren zum Umbau einer Anlage umfassend eine Einheit zur Reduktion von Stickoxiden aus einem Verbrennungsrauchgas (G), wobei das Verfahren **dadurch gekennzeichnet ist, dass**:
- eine Vor-Ort-Ammoniakanlage (11) zur Erzeugung von Ammoniak (10) und zur Verwendung in der Reduktionseinheit zur Anlage hinzugefügt wird,
- die Ammoniakanlage (11) mindestens umfasst: einen Wasserelektrolyseabschnitt (WE) zur Erzeugung eines Wasserstoffstroms (3) aus Wasser und elektrischer Energie; eine Luftzerlegungseinheit zur Erzeugung eines Stickstoffstroms (5) aus Luft; Mittel zur Bildung eines Ammoniak-Frisch-Gases (6) unter Verwendung des Wasserstoffstroms und des Stickstoffstroms, und einen Ammoniaksyntheseabschnitt (SL),
- die Anlage ein Kraftwerk ist, und
- wobei die Anlage so eingestellt ist, die Produktionsrate von Ammoniak (10) gemäß der Belastung des Kraftwerks und/oder gemäß des Bedarfs an elektrischer Energie zu steuern, wobei sich die Ammoniakproduktion während der Elektrizität-Schwachlaststunden, wenn der Bedarf an Elektrizität gering ist, erhöht und während der Elektrizität-Spitzenlaststunden, wenn der Bedarf an Elektrizität höher ist, reduziert oder gestoppt wird, wodurch die Nettoleistung der Anlage auf ein Höchstmaß gebracht wird.

7. Verfahren gemäß Anspruch 6, wobei die Einheit zur Reduktion von Stickoxiden eine selektive katalytische Reduktions- oder eine selektive nichtkatalytische Reduktionseinheit ist.

## Revendications

1. Procédé de contrôle de la teneur en oxydes d'azote dans les fumées de combustion (G) d'une installation fixe où s'effectue ladite combustion, dans lequel:
- l'ammoniac est produit sur le site de ladite installation, à l'aide d'un procédé comprenant : la production d'un courant d'hydrogène (3) par électrolyse de l'eau ; la production d'un courant d'azote (5) par séparation de l'azote de l'air ; la formation d'un gaz ammoniac d'appoint contenant l'hydrogène et l'azote dudit courant d'hydrogène et dudit courant d'azote respectivement, et la réaction dudit gaz d'appoint à une pression appropriée de synthèse de l'ammoniac ;
- ledit ammoniac (10, 12) est utilisé pour un procédé de réduction des oxydes d'azote contenus dans lesdites fumées de combustion,
**caractérisé en ce que** :
- le taux de production d'ammoniac (10) est régulé en fonction du coût et/ou de la disponibilité de l'énergie électrique, et **en ce que** :
- ladite installation est une centrale électrique pour la production d'énergie électrique ; le taux de production d'ammoniac (10) est régulé en fonction de la charge de ladite centrale électrique et/ou en fonction de la demande en énergie électrique, la production d'ammoniac étant augmentée pendant les heures creuses de consommation lorsque la demande en énergie électrique est faible, et étant réduite voire stoppée, maximisant ainsi le rendement net de ladite centrale, pendant les heures pleines de consommation lorsque la demande en énergie électrique est plus élevée.

2. Procédé selon la revendication 1, ledit procédé de réduction des oxydes d'azote étant un procédé de réduction catalytique sélective ou de réduction non catalytique sélective.

3. Procédé selon la revendication 1 ou 2, ledit courant d'azote étant obtenu par l'un des moyens qui suivent : des tamis moléculaires ; une adsorption modulée en pression (PSA) ; une adsorption modulée en pression sous vide (VPSA) ; une adsorption modulée en température (TSA) ; une séparation cryogénique.

4. Procédé selon l'une quelconque des revendications 1 à 3, la pression de synthèse de l'ammoniac se situant dans l'intervalle 80 à 300 bars.

5. Procédé selon la revendication .1, dans lequel l'excès d'ammoniac est produit pendant les heures creuses, ou lorsque la production d'ammoniac est supérieure au besoin réel du procédé de réduction de NOx, et ledit excès d'ammoniac est stocké dans un réservoir de stockage (ST), sous forme anhydre ou sous forme d'une solution aqueuse.

6. Procédé de modification d'une installation comprenant une unité de réduction des oxydes d'azote à partir d'un gaz de combustion (G), ledit procédé étant **caractérisé en ce que** :
- une usine de production d'ammoniac sur site (11), pour la génération d'ammoniac (10) et pour une utilisation dans ladite unité de réduction, est ajoutée à ladite installation,
- ladite usine de production d'ammoniac (11) comprend au moins : une section d'électrolyse d'eau (WE) pour la production d'un courant d'hydrogène (3) à partir de l'eau et de l'énergie électrique ; une unité de séparation d'air pour la production d'un courant d'azote (5) à partir de l'air ; des moyens pour former un gaz ammoniac d'appoint (6) à l'aide dudit courant d'hydrogène et dudit courant d'azote, et une section de synthèse d'ammoniac (SL),
- ladite installation étant une centrale électrique, et
- dans lequel l'installation est conçue pour réguler le taux de production d'ammoniac (10) en fonction de la charge de ladite centrale électrique et/ou en fonction de la demande en énergie électrique, la production d'ammoniac étant augmentée pendant les heures creuses lorsque la demande en énergie électrique est faible, et étant réduite voire stoppée, maximisant ainsi le rendement net de ladite centrale, pendant les heures pleines lorsque la demande en énergie électrique est plus élevée.

7. Procédé selon la revendication 6, ladite unité de réduction des oxydes d'azote étant une unité de réduction catalytique sélective ou de réduction non catalytique sélective.
